# EUROPÄISCHE PATENTSCHRIFT

(11) **EP 1 333 955 B1**
(45) Veröffentlichungstag und Bekanntmachung des Hinweises auf die Patenterteilung: **23.05.2007**
(21) Anmeldenummer: 01975940.6
(22) Anmeldetag: 22.10.2001
(51) Int. Cl.: B23K 9/127, B23K 26/03, B23K 26/04, B23K 31/12, B23K 37/02

(54) **VORRICHTUNG UND VERFAHREN ZUR BEARBEITUNG VON WERKSTÜCKEN**
DEVICE AND METHOD FOR MACHINING WORKPIECES
DISPOSITIF ET PROCEDE D'USINAGE DE PIECES A USINER

(30) Priorität: 24.10.2000 CH 208300; 12.10.2001 CH 193201
(43) Veröffentlichungstag der Anmeldung: 13.08.2003
(60) Teilanmeldung: 05076140.2
(73) Patentinhaber: Soutec Soudronic AG, 8413 Neftenbach (CH)
(72) Erfinder: AEBERSOLD, Hans, CH-8903 Birmensdorf (CH)
(74) Vertreter: Sutter, Kurt
(86) Internationale Anmeldenummer: PCT/CH2001/000627
(87) Internationale Veröffentlichungsnummer: WO 2002/034449

(56) Entgegenhaltungen:
- US-A- 4 571 479
- US-A- 4 588 872
- US-A- 4 794 223
- US-A- 4 920 249
- US-A- 5 877 960
- US-A- 5 961 858

## Beschreibung

Die Erfindung betrifft eine Vorrichtung gemäss Oberbegriff des Anspruchs 1.

Solche Vorrichtungen sind bekannt im Gebiet der Tailored Blanks oder bei der Herstellung von Rohren zum Innenhochdruck - Umformen, aber auch in anderen Gebieten.

Mit Tailored Blanks oder Platinen werden Bleche bezeichnet, welche durch Verschweissung verschiedener Blechabschnitte entstanden sind. Dabei werden die einzelnen Blechabschnitte nebeneinander gelegt und miteinander verschweisst; z. B. durch Rollennahtschweissen bei Überlappung der aneinander grenzenden Bleche oder durch Laserschweissen bei Stumpflage der Bleche.

Verschiedene Blechabschnitte können je auch zu Rohrstücken umgeformt werden, wobei eine nachfolgende Schweissung das Rohr schliesst und eine weitere Schweissung verschiedene solche Rohrstücke miteinander zu einem aus verschiedenen Blechen bestehenden Rohr verschweisst.

Platinen oder solche Rohre finden z. B. in der Automobilindustrie Verwendung. Platinen seit einigen Jahren, Rohre stehen in der Einführung. Platinen werden tiefgezogen und z.B. zu Trägem für die Karosseriestruktur geformt, wobei die unterschiedlichen Materialien oder Abmessungen der einzelnen Blechabschnitte definierte unterschiedliche mechanische Eigenschaften des hergestellten Trägers zu Folge haben. Rohre werden durch Innenhochdruck-Urnformung (IHU) ebenfalls zu Teilen der Karosseriestruktur umgeformt, mit dem Vorteil, dass komplizierte Gebilde nicht mehr aus einzelnen Teilen zusammengesetzt werden müssen und so teure Toleranzprobleme bei der Montage entfallen.

Aus dem Vorgehenden erhellt sich, dass an die Schweissnähte höchste Anforderungen zu stellen sind, da diese schon durch die Umformung hoch belastet werden. Ebenso ist es klar, dass keine strukturschwächenden Schweissfehler bestehen dürfen, welche beim Fertigprodukt zu folgeschweren Defekten führen könnten.

EP 0 770 445 zeigt ein Verfahren und eine Vorrichtung um die Qualität des Schweissprozesses bei der Herstellung von unter anderem Tailored Blanks sicherzustellen und zu überprüfen. (Auf die gesamte Offenbarung von EPO 770 445 wird hiermit ausdrücklich Bezug genommen). Das genannte Dokument zeigt eine Vorrichtung zur Herstellung von Tailored Blanks, wobei die einzelnen Blechabschnitte auf einem Schlitten in Stumpflage der zu verschweissenden Kanten fixiert und in einer einzigen, geraden Bewegungsrichtung unter einer stationären Schweissstation hindurchgeführt werden. Durch diese Relativverschiebung zwischen dem Schlitten (mit seiner geraden Absolutbewegung durch die Vorrichtung hindurch) und der stationären Schweisstation ergibt sich ein linear verlaufender Bearbeitungsweg auf den Werkstücken.

Grundsätzlich können Tailored Blanks aus beliebig grossen Einzelblechen zu beliebig grossen Platinen zusammengeschweisst werden. Heute erreichen die fertigen Platinen Dimensionen von mehreren Metern, so z. B. besteht die Seitenwand des Cheep Cherokee aus einer Platine. Bei bestimmten Anwendungen sind Längen der Schweissnaht im Bereich einiger Meter möglich.

Der wirksame Laserfokus hat dagegen einen Durchmesser von 0,2 mm und muss entsprechend präzise auf dem Bearbeitungsweg gehalten werden; wenn nicht, sind Schweissfehler die Folge. Obschon nun die Mechanik der Vorrichtung eine sehr präzise Führung des Schlittens unter der Schweissstation hindurch erlaubt, sind Toleranzen unvermeidlich. Zudem können sich weitere Massänderungen im Betrieb z.B. durch Erwärmung des Strahlwegs des Lasers ergeben. Deshalb wird gemäss EP 0 770 445 eine Korrekturjustierung für den Verlauf des Laserstrahl eingesetzt, wobei die dazu notwendigen Messungen bzw Korrekturdaten über Bildverarbeitung gewonnen werden (die Korrekturjustierung eines Laserstrahls per se ist bekannt und geschieht z.B. durch Veränderungen der Lage der Umlenkspiegel in der Laseroptik).

Zur Gewinnung der Korrekturdaten werden nun gemäss EP 0 770 445 die Ist-Lage der Kanten vor der Schweissstelle über eine Bildverarbeitung erfasst und mit den Korrekturdaten die Laseroptik angesteuert. Es lassen sich so Abweichungen von der Soll - Kantenlage bis zu einigen Zehntel mm ausgleichen. Die erzeugte Schweissnaht läuft damit dem geraden Soll - Bearbeitungsweg entlang, mit einer maximalen Abweichung der erwähnten einigen Zehntel mm.

Dieser Ausgleich funktioniert aber nur soweit, als die Strahlführung des Lasers den wirksamen Laserfokus am Soll - Ort produziert, was nicht immer der Fall ist, wie erwähnt z. B. bei Erwärmung der Strahlführung.

Hinter der Schweissstelle erfasst deshalb ein weiteres Funktionselement, wieder über Bildverarbeitung, die Ist-Lage der Schweissnaht. Liegt diese nicht am Ort, wo der Laserfokus hin korrigiert worden ist, besteht eine unerlaubte Toleranz in der Strahlführung. Damit lässt sich ein weiteres Korrektursignal für die Laseroptik gewinnen. Im Ergebnis liegt eine Regelung für korrekte Lage des Strahl auf dem geraden Bearbeitungsweg vor, was hohe Schweissqualität sicherstellt.

Neben der Qualitätssicherung durch die drei Funktionen erster Sensor für die Bildverarbeitung, Laseroptik und zweiter Sensor für die Bildverarbeitung können für den Schweissprozess noch weitere Funktionen wie z.B. eine in der Schweisstechnik an sich bekannte Materialzuführung für die Schweisstelle (in Form eines Schweissdrahts oder Metallpulver) massgebend sein. Weitere oder andere Funktionen sind nach Bedarf einzusetzen. So z.B. wenn nicht geschweisst, sondern geschnitten wird, was ebenfalls eine präzise Führung des Schneidorgans (wie Laser oder Wasserstrahl etc) bedingen kann. Weitere Funktionen können sich auch ergeben, wenn andere Werkstücke als Tailored Blanks bearbeitet werden.

Neben der beschriebenen Entwicklung hin zu höchsten Anforderungen der Schweissqualität ergibt sich mit steigender Verwendung von Tailored Blanks auch vermehrt die Forderung, nicht nur gerade Abschnitte zu verschweissen, sondern auch nicht-lineare Schweissungen herstellen zu können. Dies für zunehmend grössere Serien. Die an den Schweissprozess zu stellenden hohen Anforderungen sind heute für lineare Schweissnähte erfüllbar, für gekrümmte Nähte nicht.

Zwar ist bekannt, Platinen mit nicht-lineare Stossstellen auf einem Schlitten festzulegen und diesen in Längsrichtung durch die Vorrichtung zu gefahren, während die Schweissstation auf einer querverlaufenden Brücke hin und her fährt; durch geeignete Steuerung der beiden, jeweils gerade verlaufenden Bewegungen von Wagen und Schweissstation lassen sich beliebig gekrümmte Bearbeitungswege abfahren. Solche Vorrichtungen arbeiten mit einem einzigen Funktionselement, dem Fokussierkopf für einen Laserstrahl. Es gelingt damit nicht, einen Qualitativ hochwertigen Schweissprozess zu realisieren, da weitere Funktionen, wie z.B. in EP 0 770 445 offenbart, fehlen. US-A-4 794 223 zeigt eine Vorrichtung gemäss Oberbegriff.

Damit ist es Aufgabe der vorliegenden Erfindung, eine Vorrichtung bereitzustellen, welche erlaubt, mehrere Funktionseinheiten gleichzeitig auf einem gekrümmten Bearbeitungsweg einer Vorrichtung zum Bearbeiten von Werkstücken einzusetzen.

Die Aufgabe wird gelöst durch die kennzeichnenden Merkmale von Anspruch 1.

Dadurch, dass die Funktionseinheiten ihre Position verändern, können einerseits hintereinanderfolgend wirksame Einheiten unabhängig von den absoluten Bewegungen in der Vorrichtung zu jeder Zeit einzeln in ihrer Standardposition (zB senkrecht über der Werkstückoberfläche) auf den gekrümmten Abschnitten des Bearbeitungswegs gehalten werden; andererseits können aber auch einzelne Einheiten gegenüber der Standardposition ausgelenkt und damit Krümmungsradien realisiert werden, welche in Standardposition aufgrund der jeweiligen Abmessungen der Einheiten selbst nicht oder, der grossen Beschleunigungen wegen, nur unter grossem Aufwand realisierbar wären.

Erfindungsgemäss spielt es keine Rolle, wie die Relativbewegung zwischen den Werkstücken und den Funktionseinheiten erzeugt wird, ob durch stationär angeordnete Funktionselemente, kombiniert mit einem in allen Richtungen beweglich gehaltenen Schlitten für die Werkstücke, oder umgekehrt, oder durch eine Mischlösung wie Querbewegung der Funktionseinheiten gegenüber der Längsbewegung des Schlittens.

Die Erfindung wird nachstehend anhand der Figuren näher erläutert:

Es zeigt:
Figur 1 a bis 1 c schematisch drei Funktionseinheiten auf jeweils einem gekrümmten Bearbeitungsweg mit entsprechend veränderter Position.
Figur 2a bis 2c drei Funktionseinheiten auf den Bearbeitungswegen entsprechend den Figuren 1 a bis 1 c, dargestellt im Hinblick auf die gegenseitige Lageänderung.
Figur 3 einen Querschnitt durch ein Ausführungsbeispiel einer Einrichtung zum Anordnen der Funktionseinheiten.
Figur 4a eine Ansicht eines weiteren, nicht dem Hauptanspruch entsprechenden Ausführungsbeispiels.
Figur 4b einen Querschnitt durch das Ausführungsbeispiel von Figur 4a.
Figur 5a eine Ansicht eines weiteren, nicht den Hauptanspruch entsprechenden Ausführungsbeispiels
Figur 5b einen Schnitt durch einen Teil der Ausführungsform von Figur 5a
Figur 5c eine Sicht von oben auf das Ausführungsbeispiel von Figur 5a , und
Figur 5d eine Seitenansicht der Ausführungsform von Figur 5a.

Figur 1a zeigt zwei in Stumpflage aneinander gelegte Werkstücke 10 und 11, welche bearbeitet (vorliegend verschweisst) werden sollen. Durch die aneinanderliegenden Kanten der Werkstücke wird ein Bearbeitungsweg 4 gebildet. Drei Funktionseinheiten 1,2 und 3 sind in einer Einrichtung 13 zur Aufnahme der Funktionseinheiten angeordnet und befinden sich über dem Bearbeitungsweg 4 in Wirkposition, um die Werkstücke 10 und 11 z.B. gemäss der in EP 770 445 vorgeschlagenen Art zu verschweissen. Dies erfolgt durch einen Laserstrahl, dessen Position mit Hilfe zweier Sensoren für Bildverarbeitung geregelt wird. Denkbar ist auch ein Energiestrahl anderer Art, wie z.B. ein Elektronenstrahl. Die Funktionseinheit 1 (ein Kopf mit einer Laseroptik) befindet zwischen einer vorlaufenden Funktionseinheit 2 und einer nachlaufenden Funktionseinheit 3 (beides Sensoren für Bildverarbeitung).

Die Figur zeigt, dass die Funktionseinheiten gegenüber einem gerade verlaufenden Bearbeitungsweg ihre Position geändert haben:

Die relative Position der drei Funktionseinheiten 1,2 und 3 ändert sich laufend entsprechend der sich ändernden Krümmung des Bearbeitungswegs 12. Weiter ändern, wenn nur zwei Funktionseinheiten wirksam sind, diese ihre Position gegenüber den Werkstücken 10, 11 bzw. der Einrichtung 13 selbst dann, wenn ihr Abstand konstant bleibt.

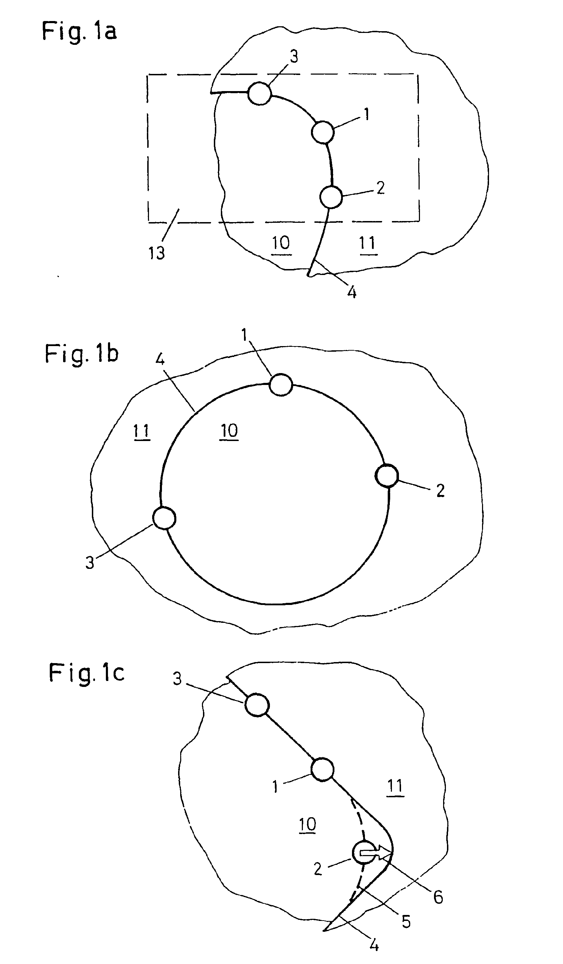

Figur 1 b zeigt einen kreisförmigen Bearbeitungsweg 4. Aus der Figur wird ersichtlich, dass bei über dem Bearbeitungsweg angeordneten Funktionseinheiten 1,2 und 3 der minimal mögliche Abstand je zweier Funktionseinheiten (hier der Funktionseinheiten 2 und 3) den minimal möglichen Krümmungsradius bestimmt. Wäre der durch den Bearbeitungsweg 12 gebildete Kreis kleiner als der Abstand zwischen den Einheiten 2 und 3, könnte eine der Einheiten nicht mehr auf dem Bearbeitungsweg 12 gehalten werden.

Figur 1 c zeigt einen abgerundet rechtwinklig verlaufenden Bearbeitungsweg 4 mit sehr kleinem Krümmungsradius. Dadurch, dass die vorlaufende Funktionseinheit 2 seitlich vom Bearbeitungsweg 4 abweicht und auf der gestrichelt gezeichneten Bahn 5 gehalten wird, ergibt sich ein einfacherer Bewegungsablauf. Einmal werden bedingt durch die möglichst gleichförmig zu haltende Schweissgeschwindigkeit und damit der möglichst gleichförmigen Geschwindigkeit der Funktionseinheit 1 gegenüber dem Bearbeitungsweg 4 grosse Beschleunigungen der Einheit 2 vermieden; dann ergibt sich ein grösserer Krümmungsradius der Bahnkurve für die jeweiligen Funktionseinheiten, was bei einem kompliziert verlaufenden Bearbeitungsweg 4 ausschlaggebend sein kann. Voraussetzung für die in der Figur gezeigte Bahnkurve 5 ist, dass die Position der Funktionseinheit 2 derart verändert werden kann, dass sie auch seitlich versetzt, dem Pfeil 6 entsprechend, auf den Bearbeitungsweg 4 einwirken kann und damit in Wirkposition bleibt. Dies im Gegensatz zu der Anordnung von Figur 1 a, wo die Funktionseinheiten 1 bis 3 in einer Anordnung direkt über dem Bearbeitungsweg 4 dargestellt sind.

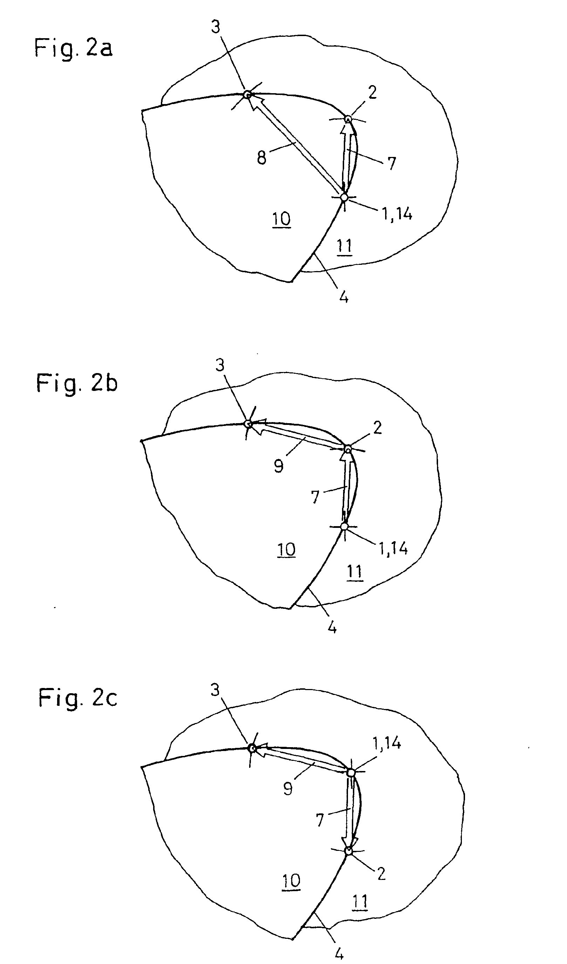

Figur 2a zeigt den Bearbeitungsweg 4 zweier Werkstücke 10 und 11 sowie die Funktionseinheiten 1, 2 und 3, wobei die Einrichtung 13 zur Entlastung der Zeichnung weggelassen ist. Dargestellt mit Hilfe eines Kreuzes ist hingegen ein Referenzpunkt 14, welcher die Position der Einrichtung 13 relativ zu den Werkstücken bezeichnet. Vorliegend fällt dieser mit der Position der vorlaufenden Funktionseinheit 1 zusammen. Gemäss Figur 2a wird die Position der Funktionseinheiten 2 und 3 vom Referenzpunkt 14 aus definiert; einmal durch den kürzeren Vektor 7 (Abstand zwischen den Einheiten 1 und 2), dann durch den längeren Vektor 8 (Abstand zwischen den Einheiten 1 und 3).

Figur 2b zeigt die Anordnung von Figur 2a, wobei die Position der Funktionseinheit 3 gegenüber der Funktionseinheit 1 (und dem Referenzpunkt 14) mit Hilfe der Position der Funktionseinheit 2 definiert wird. Die Summe der Vektoren 7 und 9 ergibt die gegenseitige Lage der Funktionseinheiten 1 und 3.

Figur 2c zeigt wiederum die Anordnung von Figur 2a, wobei die Funktionseinheit 1 (und der Referenzpunkt 14) zwischen den Funktionseinheiten 2 und 3 liegt und so deren Position durch die Vektoren 7 und 9 definiert wird (Abstand zwischen den Einheiten 2 und 3).

Obschon je nach Einsatzzweck alle Varianten der Figuren 2a bis 2c realisierbar sind, ist die Anordnung von Figur 2c besonders geeignet. Wird ausgehend vom Referenzpunkt 14 (welcher vorzugsweise, aber nicht zwingend, mit einer der Funktionseinheiten 1 bis 3 zusammenfällt) rechnerisch durch die Steuerung die jeweilige Position der Funktionseinheiten 1 bis 3 ermittelt oder mechanisch durch entsprechend den Vektoren 6 bis 9 beweglich angeordnete Träger die Bahnkurve 4 abgefahren, sind Rundungsfehler, Toleranzen etc. unvermeidlich. Die Auswirkungen von Winkeifehlern vergrössern sich nun entsprechend dem Abstand zwischen Referenzpunkt 14 und jeweiliger Funktionseinheit 1, 2 oder 3; gegenüber der Anordnung von Figur 2a ist deshalb die Anordnung von Figur 2c mit den dort gezeigten kurzen Vektoren vorteilhaft. Ebenso ist die Anordnung von Figur 2c gegenüber derjenigen von Figur 2b vorteilhaft, da sich in letzterer die Fehler zwischen dem Referenzpunkt 14 und der Funktionseinheit 3 addieren.

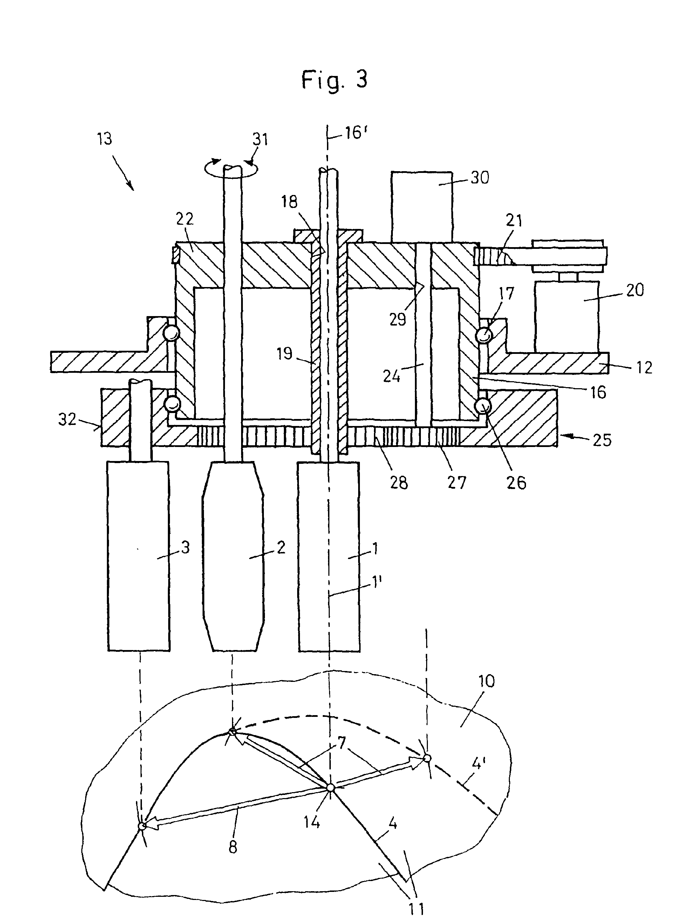

Figur 3 zeigt einen Querschnitt durch eine Ausführungsform der erfindungsgemässen Einrichtung 13 mit den Funktionseinheiten 1, 2 und 3. Weiter dargestellt ist schematisch ein Bearbeitungsweg 4 bzw. 4'. Der Referenzpunkt 14 definiert die Position der Einrichtung 13 gegenüber den Werkstücken 10 und 11, was der übergeordneten Vorrichtungnsteuerung ermöglicht, die im Rahmen der vorbestimmten Relatiwerschiebung durch Aenderung der Verschiebungsrichtung und/ oder Verschiebungsgeschwindigkeit zwischen den Werkstücken 10,11 und der Einrichtung 13 sicherzustellen.

Die Funktionseinheit 1 ist als Sensor für Bildverarbeitung ausgebildet und erfasst z.B. die Kantenlage der aneinander liegenden Werkstücke 10,11 in einem bestimmten, aktuell zu bearbeitenden Abschnitt des Wegs 4. Die Funktionseinheit 2 ist als Fokussierkopf für einen Energiestrahl, z.B. den Strahl eines Jag-Lasers ausgebildet und wirkt als Schweisseinheit, um die Werkstücke 10,11 miteinander zu verschweissen. Die Funktionseinheit 3 ist wiederum als Sensor für Bildverarbeitung ausgebildet und erfasst die Lage und/oder die Qualität der Schweissnaht. EP 0 770 445 zeigt eine mögliche Art des Zusammenwirkens dieser Funktionseinheiten.

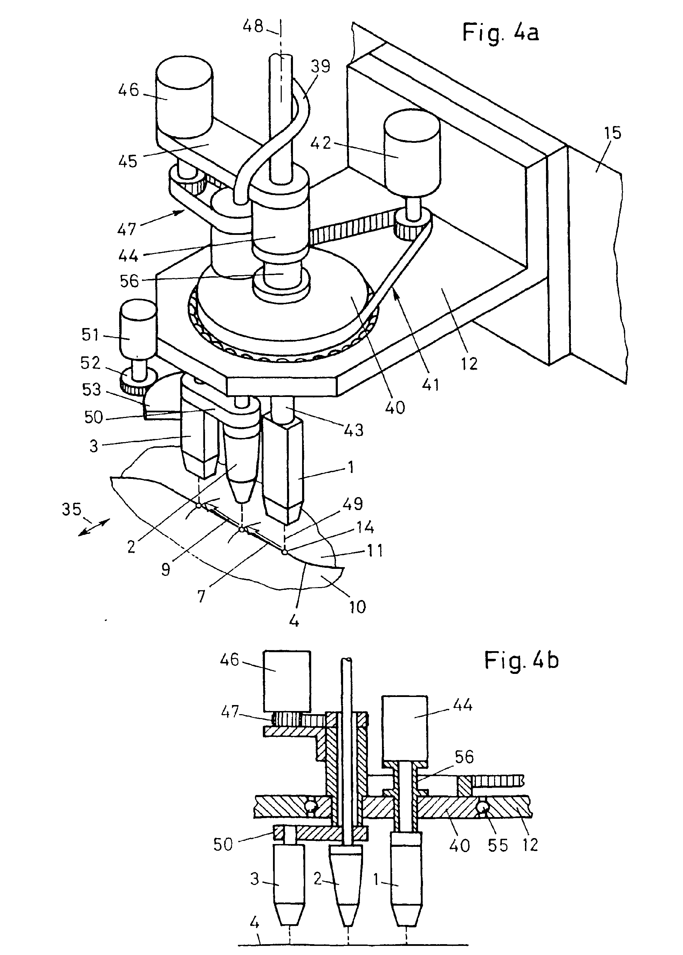

Eine Basisplatte 12 bildet die Basis für die Anordung der Funktionseinheiten 1,2 und 3 in der Einrichtung 13 und ist vorzugsweise an einer Brücke 15 verschiebbar angeordnet (siehe Figur 4a). Dadurch ergibt sich die weiter oben beschriebene Anordnung in der erfindungsgemäss ausgebildeten Vorrichtung, in welcher auf einem Schlitten befestigte Werkstücke 10,11 längs vorgeschoben und so unter einer an der Brücke 15 quer verschiebbar gehaltenen Einrichtung 13 hindurchlaufen. Die Erfindung ist aber nicht auf solch eine Anordnung beschränkt und immer verwendbar, wenn eine Relatiwerschiebung auf eine beliebige Art zwischen den Werkstücken 10,11 und der Einrichtung 13 erzeugt wird.

An der Basis 12 ist ein lageveränderbarer Träger 16 angeordnet; er ist als Rotationskörper ausgebildet und besitzt eine Symmetrieachse 16'. Durch die schematisch angedeutete Kugellagerung 17 ist der Träger 16 rotierbar an der Basis 12 gelagert. In Träger 16 befindet sich eine zentrale Öffnung 18 mit einem Einsatz 19, welcher erlaubt, die gegenüber der Basis 12 örtlich fest positionierte Funktionseinheit 1 unabhängig von einer Rotation des Trägers 16 in einer eigenen Orientierung zu halten. Die Symmetrieachse 16' des Trägers 16 fällt mit der Wirklinie 1' der Funktionseinheit 1 zusammen; der Ort der Wirklinie 1' auf dem Bearbeitungsweg 4 bildet den Referenzpunkt 14. Die Position der Basis 13 gegenüber den Werkstücken 10,11 ist so definiert. Ebenso die Position der Funktionseinheit 1 gegenüber den Werkstücken 10,11.

Ein an der Basis 12 festgelegter Motor 20 wirkt über einen Riementrieb 21 auf ein am Träger 16 fest angeordnetes Riemenrad 22 ein, so dass der Träger 16 gegenüber der Basis 12 verdreht werden kann, was zur Positionsänderung des am Träger 16 festgelegten Funktionseinheit 2 führt.

Am Träger 16 ist weiter eine Ringstruktur 25 angeordnet, welche ihrerseits als Träger für die Funktionseinheit 3 dient. Ringstruktur 25 und Träger 16 sind über ein schematisch dargestelltes Kugellager 26 miteinander verbunden, mit der Folge, dass der Ring 25 gegenüber dem Träger 15 (und natürlich auch gegenüber der Basis 14) verdreht werden kann. Den Antrieb dafür liefert ein Ritzel 27, welches auf eine Innenverzahnung 28 am Innenumfang des Rings 25 einwirkt. Das Ritzel 27 ist an einer Welle 24 angeordnet. Diese verläuft durch eine Öffnung 29 im Träger 16. Schematisch angedeutet ist ein am Träger 16 festgelegter Antrieb 30 für die Welle 24, durch welchen die Relativposition des Rings 25 gegenüber dem Träger 16 verändert werden kann.

Die Anordnung des Rings 25 am Träger 16 und dessen Anordnung wiederum an der Basis 12 entsprechen einer Kaskade, wobei der Ring 25 über den Träger 16 an der Basis 12 mittelbar angeordnet ist.

Im unteren Bereich der Figur ist der Bearbeitungsweg 4 dargestellt, ebenso der Referenzpunkt 14. Die Konfiguration der Funktionseinheiten auf dem Bearbeitungsweg 4 entspricht derjenigen von Figur 2a. Durch geeignete Rotation des Trägers 12 kann jedoch ohne weiteres auch die Konfiguration entsprechend der Figur 2c hergestellt werden; in der Figur entspricht dies auf dem gestrichelt eingezeichnet Bearbeitungsweg 4' laufenden Anordnung.

Die Funktionseinheit 1 kann an der Basis 12 seinerseits um sich selbst verdrehbar bzw. rotierbar gelagert sein, z.B. dann, wenn zum Zweck der Bildverarbeitung stets dieselbe definierte Lage gegenüber dem erfassten Abschnitt des Bearbeitungswegs 4 erforderlich ist. Dies gilt auch für die Lagerung der Funktionseinheit 2 am Träger 16, welche fest oder rotierbar erfolgen kann. Eine feste Anordnung ist möglich, wenn ein runder Laserfokus zur Verschweissung der Werkstücke 10,11 Verwendung findet; bei einem ovalen Fokus ist eine gleichbleibende, definierte Lage des Fokus relativ zum Abschnitt des Bearbeitungswegs erforderlich und damit eine. Rotierbarkeit des Funktionselements 2 entsprechend dem Pfeil 31. Zur Entlastung der Zeichnung ist ein entsprechender Antrieb weggelassen. Das Gesagte betreffend der Lagerung der Funktionseinheiten gilt auch für die Funktionseinheit 3; auch dort ist in der Figur zu deren Entlastung ein entsprechender Antrieb bzw. die feste Lagerung weggelassen.

Lagerung und Rotationsantrieb der Funktionselemente können konventionell ausgeführt werden und sind deshalb vorliegend nicht näher beschrieben.

Das mit einer Innenverzahnung 28 zusammenwirkende Ritzel 27 kann natürlich auch an einem Aussenumfang 32 des Rings 25 angeordnet werden.

Figur 4a zeigt eine nicht erfindungsgemäße Einrichtung 13 zum Lagern von Funktionselementen 1,2 und 3, angeordnet an einer Brücke 15. Die Einrichtung 13 ist damit querverschiebbar gehalten zum Längsvorschub der Werkstücke 10 und 11 entsprechend dem Doppelpfeil 35. An der Basisplatte 12 der Einrichtung 13 ist ein scheibenförmiger Träger 40 rotierbar gelagert. Über einen Riementrieb 41 bewirkt ein an der Basis 12 festgelegter Motor 42 die gewünschte Rotation. Im Zentrum des Trägers 40 wiederum ist, ebenfalls um sich selbst rotierbar, das Funktionselement 1 gelagert und befindet sich so gegenüber der Basis 12 in definierter, örtlich fester Position.

Die Rotation des Funktionselements 1 erfolgt über eine Welle 43, welche durch einen Motor 44 angetrieben wird. Der Motor 44 ist an der Basis 12 festgelegt, die entsprechende Anordnung aber zur Entlastung der Zeichnung weggelassen.

Das Funktionselement 2 ist ebenfalls am Träger 40 gelagert, aber nicht zentral, und ändert damit seine Position gegenüber der Basis 12 entsprechend dessen Rotation. Ein Hilfsträger 45 folgt der Rotation des Trägers 40 und trägt einen Antrieb 46, welcher wiederum über einen schematisch dargestellten Riementrieb 47 das Element 2 um sich selbst dreht.

An der Halterung des Funktionselements 2 ist ein weiterer Träger 50 angeordnet, welcher das Funktionselement 3 lagert. Ein schematisch dargestellter Antrieb 51 wirkt über ein Ritzel 52 auf einen Zahnradabschnitt 53 für die Rotation des Funktionselements 3 um sich selbst. Nur schematisch angedeutet ist ein Glasfaserkabel 39 für einen im Element 2 angeordneten Jag Laser.

Der Träger 40 ist als Rotationskörper bzw. Ring ausgebildet, seine Symmetrieachse 48 fällt mit der Wirklinie 49 der Funktionseinheit 1 zusammen; Symmetrieachse 48 und Wirklinie 49 durchstossen die Werkstücke am Ort des Referenzpunkts 14.

Die in der Figur 4a dargestellte Einrichtung 13 weist die Konfiguration von Figur 2b auf.

Figur 4b zeigt abschnittsweise einen Querschnitt durch die Anordnung von Figur 4a.

Der Träger 40 ist über ein schematisch dargestelltes Kugellager 55 an der Basis 12 gelagert. Die Funktionseinheit 1 ist über ein Lagerelement 56 im Zentrum des Träger 40 festgelegt, derart, dass sie an dessen Rotation selbst nicht teilnimmt, sondern nur durch den Antrieb 44 in ihrer Position gegenüber der Basis 12 verändert wird. Der Verschwenkträger 50 ist im Träger 40 gelagert und erfährt bei dessen Rotation eine Positionsänderung. Diese Positionsänderung erfährt auch das Funktionselement 2. Letzteres kann über den in Figur 4a dargestellten Antrieb 46, 47 um sich selbst rotiert werden. Am Verschwenkträger 50 gelagert ist das Funktionselement 3. Der in Figur 4a gezeigte Antrieb 52, 53 zur Rotation des Funktionselements 3 ist zur Entlastung der Figur weggelassen.

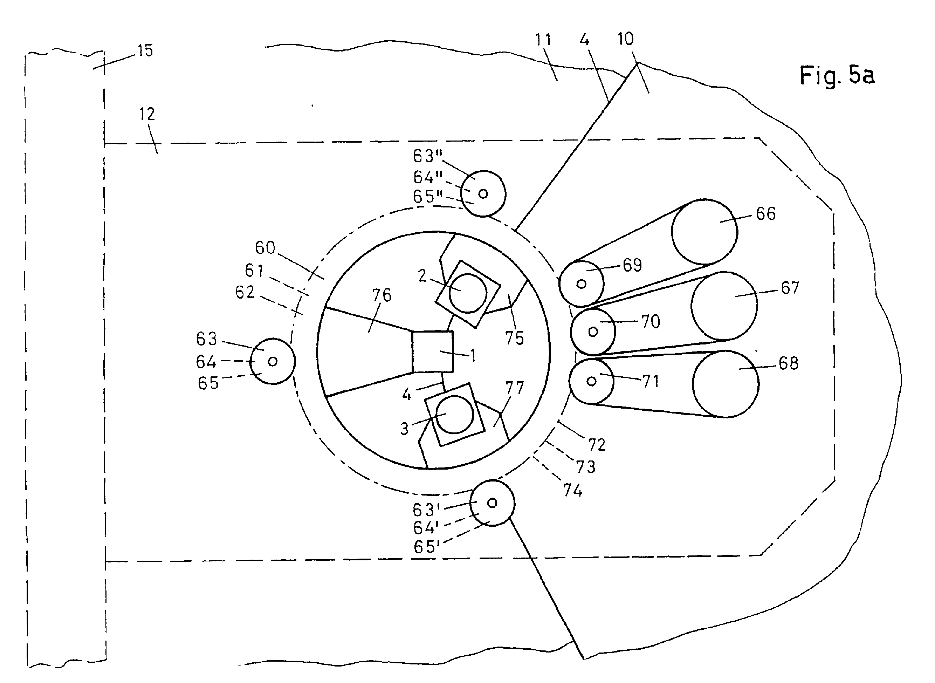

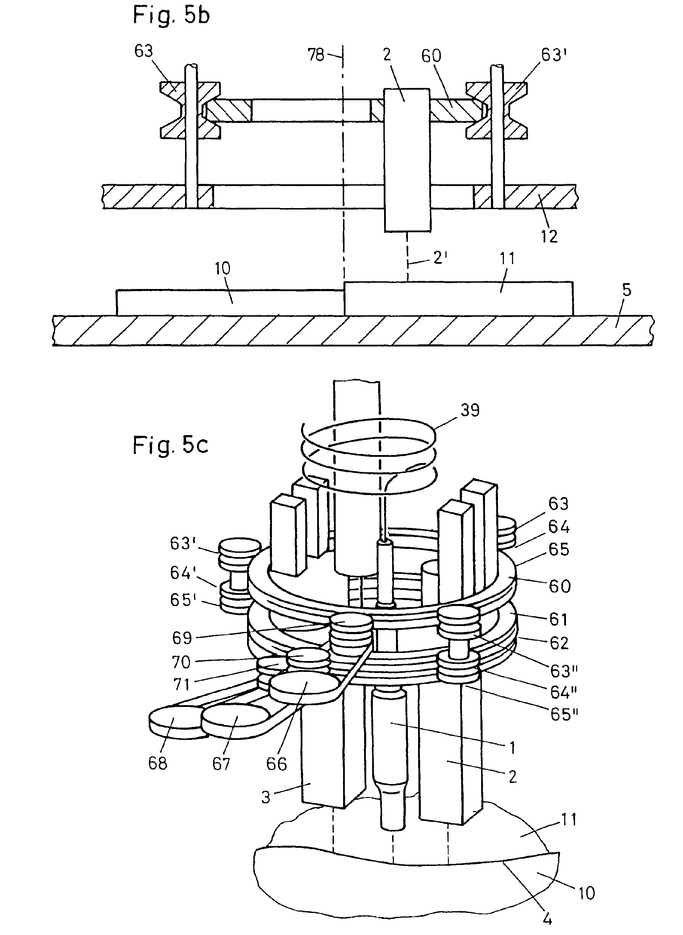

Figur 5a zeigt eine weitere nicht erfindungsgemäße Ausführungsform einer Einrichtung 13 zum Lagern der Funktionselemente 1, 2 und 3. Dargestellt ist eine Ansicht von oben auf die Einrichtung 13 und auf die darunterliegenden Werkstücke 10, 11 sowie dem Bearbeitungsweg 4. Der Umriss der Basis 12 ist schematisch durch die gestrichelte Linie angedeutet; ebenso derjenige der Brücke 15. Ein ringförmiger Träger 60 verdeckt in der Figur unter ihm angeordnete, gleich ausgebildete Träger 61 und 62. Die Träger 60, 61 und 62 befinden sich also über der Basis 12, senkrecht untereinander, deren Symetrielinien fallen zusammen und stehen senkrecht auf der Basis 12. Der Träger 60 ist die über Führungsrollen 63, 63' und 63" an der Basis gelagert (siehe Figur 5b). Die Träger 61 und 62 sind über Führungsrollen 64, 64' und 64" gelagert, in dergleichen Art, wie wie der Träger 60 gelagert ist und wie sie in Figur 5b dargestellt, ist. Damit sind die Ringe 60, 61 und 62 um ihre Symmetrieachse rotierbar an der Basis 12 angeordnet.

Ein Riemenantrieb 66, 67 und 68 wirkt je auf einen der Träger 60, 61 und 62. Die Ritzel 69, 70 und 71 der Antriebe 66, 67 und 68 wirken dabei auf eine Aussenverzahnung 72, 73 und 74 am entsprechenden Ring 60, 61 und 62. Vorzugsweise wird der Durchmesser des Ritzels 69, 70, 71 klein im Verhältnis zum Durchmesser der Ringe 60, 61 und 62 gewählt. Durch die entsprechende Untersetzung kann die Rotation der Ringe sehr präzis angesteuert werden, was für die einwandfreie Wirkung der Funktionselemente entscheidend sein kann.

Der Ring 60 weist einen Abschnitt 75 auf, welcher die Funktionseinheit 2 abstützt. Der Ring 61 weist einen Abschnitt 76 zur Lagerung der Funktionseinheit 2, und der Ring 62 weist einen Abschnitt 77 zur Lagerung der Funktionseinheit 3 auf. Die Wirklinie der Funktionseinheit 1 durchstösst den Bearbeitungsweg 4 im Referenzpunkt 14, welcher zur Entlastung der Figur weggelassen ist.

Aus der Konfiguration gemäss Figur 5a ist ersichtlich, dass die Funktionselemente 1,2 und 3 im Innenbereich der Ringe 60,61 und 62 angeordnet sind, was dazu führt, dass deren gegenseitigen Abstände unbeinflusst sind von der Ausbildung der Ringe 60,61 und 62 (abgesehen von deren Durchmesser, welcher leicht bei Bedarf zu vergrössern ist). Weiter können durch die Ringstruktur Führungsrollen und Antrieb für die Rotation der Ringe im Aussenbereich angeordnet werden, was dazu führt, dass der Innenraum vollumfänglich für die Funktionselemente zur Verfügung steht.

Im Ergebnis ist die dargestellte Struktur universell einsetzbar für einfache und kompliziete Bearbeitungswege, für ein einziges oder für eine grössere Anzahl von Funktionseinheiten. Der minimale Abstand der Funktionseinheiten hängt nicht ab von der Trägerstruktur selbst sondern ausschliesslich von der Bauform der Elemente selbst.

Datenaustausch und Energiezufuhr zu den Funktionseinheiten kann über Kabel oder über Schleifringe erfolgen. Schleifringe können zB an einem Aussenumfang angeordnet werden und haben den Vorteil, dass die Ringe beliebig rotiert werden können, ohne dass die Verdrillung von Kabel beachtet werde muss. Natürlich ist auch drahtlose Datenübertragung denkbar.

Die Konfiguration der Einrichtung 13 gemäss Figur 5a entspricht der Anordnung von Figur 2c.

Figur 5b zeigt einen Querschnitt durch den Ring 60, die Führungrollen 63, 63' (welche in der Figur einander gegenüberliegen) und die Basis 12. Die Führungsrollen wälzen auf dem Aussenumfang des Trägers 60 ab und stützen diesen so radial; gleichzeitig erfolgt durch die schrägen Flanken über die gegengleich ausgebildeten Kontaktflächen der Rollen 63, 63' durch Formschluss eine axiale Abstützung. Die anderen Ringe 61 und 62 sind zur Entlastung der Figur weggelassen, ebenso die Antriebe 66, 67 und 68. Weiter dargestellt ist schematisch die Funktionseinheit 2 mit ihrer Wirklinie 2' sowie die Symetrieachse 75 des Rings 60. Ebenso ersichtlich sind die Werkstücke 10, 11. Die Führungsrollen 63 sind frei drehbar auf den schematisch angedeuteten Führungsrollenhaltern 64, 64' angeordnet. Die Halter 64, 64' wiederum sind an der Basis 12 festgelegt. Aus dieser Konfiguration ergibt sich, dass bei Anordnung mehrerer Führungsrollen 63, 64 oder 65 mehrere Ringe übereinander, in beliebiger Anzahl mit Hilfe derselben Halterung 64 an der Basis 14 festgelegt werden können.

Alternativ können die Führungsrollen eine Verzahnung aufweisen, welche der Aussenverzahnung der Ringe 60 bis 63 zusammenwirkt, mit dem Vorteil, dass getrennte Antriebe 66 bis 68 entfallen.

Figur 5c zeigt eine Ansicht von der Seite der in den Figuren 5a und 5b beschriebenen Anordnung. Gleiche Nummern bezeichnen gleiche Teile. Zur Entlastung der Zeichnung sind Brücke 15 und Basis 12 weggelassen.

Weitere Ausführungsbeispiele können wie folgt ausgestaltet sein:
- z.B. Anordnung gemäss Figur 3, wobei der Ring 25 weggelassen ist und entsprechend nur zwei Funktionselemente zur Anwendung gelangen. Das Element 2 wird gegenüber der Figur 3 unverändert angeordnet, während das Element 1 nicht zentral im Träger 16, sondern versetzt wie das Element 2 vorgesehen wird. Bei einer Positionsänderung verändert sich die relative Lage der Elemente 1,2 nicht, aber deren Position. Bei der Relatiwerschiebung zwischen den Werkstücken 10,11 und der Einrichtung 13 lässt sich so ebenfalls ein beliebiger Bearbeitungsweg abfahren.

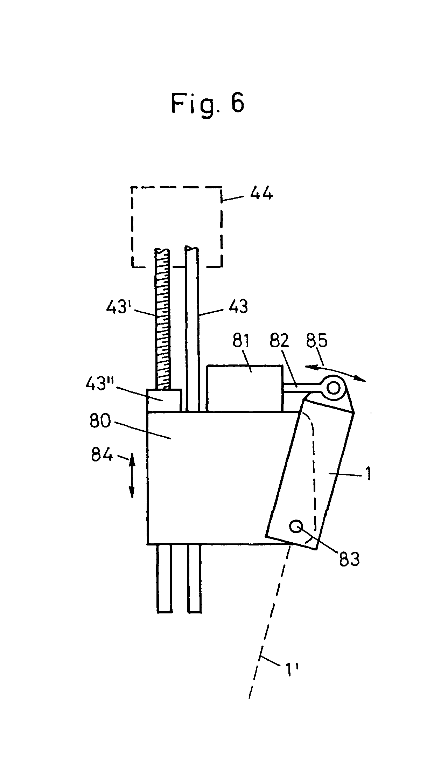

Weitere, nicht erfindungsgemäße Beispiele können wie folgt aussehen:
- z.B. Anordnung gemäss Figur 4a, wobei mehrere Träger 50 vorgesehen sind, so dass diese Träger an einem gemeinsamen Ort angelenkt sind und vorzugsweise eine gemeinsame Verschwenkachse aufweisen.
- z.B. Anordnung gemäss Figur 4a, wobei das Element 1 an seiner Welle 43 höhenverstellbar und / oder kippbar angeordnet ist. Figur 6 zeigt schematisch das Element 1 in der Konfiguration von Figur 4a, welches nicht direkt mit der Welle 43 verbunden, sondern auf einem Hilfsträger 70 an einem Verschwenkpunkt 73 verschwenkbar (s Doppelpfeil 75) angeordnet ist. Den Verschwenkantrieb liefert ein Motor 71 über eine Schubstange 72. Neben der Welle 43 ist zusätzlich eine Gewindestange 43' vorgesehen, welche in einem Gegenstück 43" des Hilfsträgers 70 läuft und bei Rotation einen Höhenversatz des Hilfsträgers 70 entsprechend dem Doppelpfeil 74 bewirkt. Die Rotation des Hilfsträgers 70 kann nach wie vor durch den gestrichelt angedeuteten Motor 44 bewirkt werden.

## Patentansprüche

1. Vorrichtung zum Bearbeiten von Werkstücken (10,11) durch Relatiwerschiebung mehrerer gleichzeitig wirkender Funktionseinheiten (1,2,3) gegenüber den sich in Arbeit befindenden Werkstücken mit einer Einrichtung (13) zum Lagern der Funktionseinheiten, wobei die Einrichtung eine Basis (12) und mindestens zwei Träger (16,25) aufweist, um die Funktionseinheiten (1,2,3) während einer sich beliebig ändernden Richtung der Relatiwerschiebung durch Veränderung ihrer Position laufend in Wirkposition gegenüber ihrem auf dem Bearbeitungsweg (4) liegenden, aktuell zu bearbeitenden Werkstückabschnitt zu halten, wobei die mindestens zwei Träger eine gemeinsame Rotationsachse (16') aufweisen und gegeneinander sowie gegenüber der Basis (12) verdrehbar angeordnet sind, und einer der Träger (16) mindestens teilweise als Rotationskörper ausgebildet und an der Basis (12) um seine Symmetrieachse rotierbar angeordnet ist, **dadurch gekennzeichnet, dass** einer der Träger (25) als Ringstruktur ausgebildet ist und über einen kreisbogenfönnigen Innenumfang an einem kreisbogenförmigen Aussenumfang des anderen Trägers (16) gelagert ist.

2. Vorrichtung nach Anspruch 1, **dadurch gekennzeichnet, dass** die Basis (12) für Relatiwerschiebung gegenüber den Werkstücken an der Vorrichtung beweglich angeordnet ist, vorzugsweise quer zum Längsvorschub der Werkstücke.

3. Vorrichtung nach Anspruch 1, **gekennzeichnet durch** einen starr gegenüber der Basis (12) festgelegten Riemen- oder Zahnantrieb (20), welcher auf einen Aussenumfang des Trägers (16) wirkt und vorzugsweise untersetzt ist.

4. Vorrichtung nach Anspruch 1, **dadurch gekennzeichnet, dass** eine der Funktionseinheiten (1) im Innenbereich des als Ringstruktur ausgebildeten Trägers (25) angeordnet und über eine Halterung (19) am anderen Träger (16) festgelegt ist.

5. Vorrichtung nach einem der vorangehenden Ansprüche, **dadurch gekennzeichnet, dass** eine der Funktionseinheiten (1) als Fokussierkopf für einen Energiestrahl und die weiteren Funktionseinheiten (2,3) als Sensor, vorzugsweise als Sensor für eine Bildverarbeitung, ausgebildet sind.

6. Vorrichtung nach Anspruch 1, **dadurch gekennzeichnet, dass** an dem einem Träger (16) zwei Funktionseinheiten (1,2) angeordnet sind.

## Claims

1. Apparatus for the working of workpieces (10, 11) by relative displacement of several simultaneously-operating functional elements (1, 2, 3) in relation to the workpieces being worked with a device (13) for bearing said functional elements, said device comprising a base (12) and at least two supports (16, 25) for holding said functional elements (1, 2, 3) by positional change continously in acting position in relation to the workpiece section being actually under treatment on their working path (4) during an arbitrarily changing direction of the relative displacement, wherein the at least two supports have a common rotation axis (16') and are swivably arranged against each other and the base (12) and wherein one of said supports (16) is at least partly a rotational solid and is rotatably arranged at the base (12) around its symmetry axis, **characterised in that** one of the supports (25) is arranged as a ring structure and is supported over a circular arc shaped inner circumference on the circular arc shaped outer circumference of the other support (16).

2. Apparatus according to claim 1, **characterized in that** said base (12) is movably arranged at the apparatus for a relative movement in relation to the workpieces, in particular that it is arranged transverse to the longitudinal feed direction of the workpieces.

3. Apparatus according to claim 1, **characterized by** a belt or toothed drive (20) which is fixedly arranged in relation to the base (12) and which acts on an outer circumference of the support (16) and which is preferably provided with a reduction.

4. Apparatus according to claim 1, **characterized in that** one of said functional elements (1) is arranged in the inner area of the support (25) which is provided with a ring-shaped structure and is fixed by a holder (19) to the other support (16).

5. Apparatus according to one of the preceding claims, **characterized in that** one of said functional elements (1) is a focusing head for an energy beam and the further functional elements (2, 3) are adapted as a sensor, preferably as a sensor for image processing.

6. Apparatus according to claim 1, **characterized in that** two functional elements (1, 2) are arranged on one of the supports (16).

## Revendications

1. Dispositif pour usiner des pièces (10, 11) par translation relative de plusieurs unités fonctionnelles (1, 2, 3) agissant simultanément par rapport aux pièces en cours d'usinage, comportant une installation (13) pour stocker les unités fonctionnelles, l'installation comportant une base (12) et au moins deux supports (16, 25), destinés à maintenir constamment en position active les unités fonctionnelles par rapport à leur segment de pièce à usiner à l'instant, se trouvant sur la voie d'usinage (4), au cours d'une direction variant de manière quelconque de la translation relative, les au moins deux supports présentant un axe de rotation (16') commun et étant disposés de manière à pouvoir tourner l'un par rapport à l'autre ainsi que par rapport à la base (12), et l'un des supports (16) étant réalisé au moins en partie sous la forme d'un corps rotatif et disposé rotatif sur la base (12), autour de son axe de symétrie, **caractérisé en ce que** l'un des supports (25) est réalisé en tant que structure annulaire et est supporté, par un pourtour intérieur en forme d'arc de cercle, sur un pourtour extérieur en forme d'arc de cercle de l'autre support (16).

2. Dispositif selon la revendication 1, **caractérisé en ce que** la base (12) est disposée déplaçable sur le dispositif, pour la translation relative par rapport aux pièces, de préférence transversalement à l'avance longitudinale des pièces.

3. Dispositif selon la revendication 1, **caractérisé par** un dispositif d'entraînement à courroie ou à denture (20), fixé rigidement par rapport à la base (12), qui agit sur un pourtour extérieur du support (16) et est de préférence démultiplié.

4. Dispositif selon la revendication 1, **caractérisé en ce que** l'une des unités fonctionnelles (1) est disposée dans la zone intérieure du support (25) réalisé en tant que structure annulaire, et est fixée sur l'autre support (16), par l'intermédiaire d'une fixation (19).

5. Dispositif selon l'une des revendications précédentes, **caractérisé en ce que** l'une des unités fonctionnelles (1) est réalisée sous la forme d'une tête de focalisation pour un rayon énergétique et les autres unités fonctionnelles (2, 3) sont réalisées sous la forme d'un capteur, en particulier d'un capteur pour un traitement d'image.

6. Dispositif selon la revendication 1, **caractérisé en ce que** deux unités fonctionnelles (1, 2) sont disposées sur un support (16).
